# FASCICULE DE BREVET EUROPEEN

(11) **EP 1 599 766 B1**
(45) Date de publication et mention de la délivrance du brevet: **08.05.2013**
(21) Numéro de dépôt: 04717655.7
(22) Date de dépôt: 05.03.2004
(51) Int. Cl.: G04C 3/12, H02N 1/00

(54) **PROCÉDÉ DE FORMATION D'UN DISPOSITIF MEMS**
HERSTELLUNGSVERFAHREN EINER MEMS EINRICHTUNG
METHOD OF PRODUCING A MEMS DEVICE

(30) Priorité: 05.03.2003 FR 0302697
(43) Date de publication de la demande: 30.11.2005
(73) Titulaire: CENTRE NATIONAL DE LA RECHERCHE SCIENTIFIQUE (CNRS), 75016 Paris (FR); UNIVERSITE DE FRANCHE-COMTE, 25000 Besançon (FR)
(72) Inventeur: BOURBON, Gilles, F-25000 Besançon (FR); HIBERT, Cyrille, CH-1188 Saint-George (CH); JOSEPH, Eric, F-25170 Chaucenne (FR); LE MOAL, Patrice, F-25000 Besançon (FR); MINOTTI, Patrice, F-25660 Gennes (FR)
(74) Mandataire: Regimbeau
(86) Numéro de dépôt international: PCT/FR2004/000525
(87) Numéro de publication internationale: WO 2004/081695

(56) Documents cités:
- WO-A-01/09519
- US-A- 3 645 089
- US-A- 5 631 514
- RENARD S: "INDUSTRIAL MEMS ON SOI" JOURNAL OF MICROMECHANICS & MICROENGINEERING, NEW YORK, NY, US, vol. 10, no. 2, 27 septembre 1999 (1999-09-27), pages 245-249, XP008008638 ISSN: 0960-1317
- MACDONALD N C: "SCREAM MICROELECTROMECHANICAL SYSTEMS" MICROELECTRONIC ENGINEERING, ELSEVIER PUBLISHERS BV., AMSTERDAM, NL, vol. 32, no. 1/4, 1 septembre 1996 (1996-09-01), pages 49-73, XP000624901 ISSN: 0167-9317
- LEE S ET AL: "THE SURFACE/BULK MICROMACHINING (SBM) PROCESS: A NEW METHOD FOR FABRICATING RELEASED MEMS IN SINGLE CRYSTAL SILICON" JOURNAL OF MICROELECTROMECHANICAL SYSTEMS, IEEE INC. NEW YORK, US, vol. 8, no. 4, décembre 1999 (1999-12), pages 409-416, XP000964024 ISSN: 1057-7157
- AYAZI F ET AL: "HIGH ASPECT-RATIO COMBINED POLY AND SINGLE-CRYSTAL SILICON (HARPSS) MEMS TECHNOLOGY" JOURNAL OF MICROELECTROMECHANICAL SYSTEMS, IEEE INC. NEW YORK, US, vol. 9, no. 3, 1 septembre 2000 (2000-09-01), pages 288-294, XP001010966 ISSN: 1057-7157

## Description

L'invention concerne le domaine des microsystèmes électromécaniques (MEMS), et plus particulièrement, les micromoteurs et microréducteurs obtenus par gravure profonde dans un substrat en matériau semi-conducteur.

Le document US 5 631 514 (publié le 20 mai 1997) décrit un micromoteur apte à entraîner en rotation une roue dentée. Le micromoteur comprend un élément denté de sortie venant en engrènement avec la roue dentée, un élément formant bielle connecté à l'élément de sortie et des actionneurs électrostatiques à peignes interdigités (appelés « comb drive » selon la terminologie anglosaxonne généralement employée) commandant le déplacement de l'élément formant bielle. Les mouvements combinés des actionneurs entraînent la rotation de l'élément denté de sortie.

Les différents éléments constitutifs du micromoteur décrit dans ce document s'étendent dans différents plans du substrat. Par conséquent, la fabrication du micromoteur nécessite la gravure d'un substrat formé d'un empilement de couches minces et l'utilisation de plusieurs masques de gravure successifs. La fabrication du micromoteur au moyen du mirco-usinage de surface du silicium polycristallin est par conséquent relativement complexe.

Le document WO 01/09519 (publié le 8 février 2001) décrit une microvalve MEMS comprenant un élément obturateur entraîné en rotation par des actionneurs électrostatiques de type comb drive. Les actionneurs électrostatiques agissent sur l'élément obturateur par friction.

Le micromécanisme décrit dans ce document ne permet pas un contrôle précis du positionnement ou de la vitesse de l'élément actionné.

En outre, les dispositifs décrits dans les documents US 5 631 514 et WO 01/09519 sont obtenus par microgravure de surface, c'est-à-dire sur des couches minces de silicium présentant une épaisseur inférieure à 4µm. Du fait de leur faible épaisseur, les éléments constitutifs de ces dispositifs ne peuvent supporter des déformations importantes. Les structures de dispositif proposées dans ces documents ne sont donc pas adaptées à l'entraînement d'éléments avec un pas d'entraînement important (supérieur ou égal à 10µm), ce qui ne permet pas d'envisager l'accouplement de ces dispositifs d'entraînement avec des rouages classiques dans des domaines tels que l'horlogerie.

Le document « Single mask, large force, and large displacement electrostatic linear inchworm motors », Richard YEH, Seth HOLLAR, Kristofer S. J. PISTER (janvier 2001) décrit un micromoteur apte à entraîner en translation une crémaillère dentée. Le micromoteur est obtenu par gravure profonde dans une couche de silicium d'épaisseur comprise entre 15 et 50µm. Ce micromoteur est formé de deux actionneurs électrostatiques de type comb-drive connectés en série. Les mouvements combinés des actionneurs entraînent la translation de la crémaillère.

Dans un tel actionneur, le mouvement est obtenu par la force électrostatique normale générée entre les doigts des peignes interdigités. Or cette force normale dépend de la surface de recouvrement entre les doigts et également de la distance entre les doigts. La distance entre les doigts doit être suffisamment faible pour que la force électrostatique générée soit significative. Par conséquent, un tel actionneur présente nécessairement un pas limité (environ 2µm).

La structure de l'actionneur proposé dans ce document n'est pas adaptée à l'entraînement d'éléments dentés présentant un pas supérieur ou égale à 10µm. Ainsi, cet actionneur ne permet pas non plus d'envisager l'accouplement du dispositif d'entraînement avec des rouages classiques.

Un but de l'invention est de fournir un procédé simplifié de formation d'un mécanisme d'actionnement de très faible encombrement et présentant un pas plus important que les dispositifs de l'art antérieur.

A cet effet, l'invention propose le procédé défini dans la revendication 1.

Par « auto-assemblé », on entend dans le cadre de la présente invention un système exempt de toute manipulation et/ou opération d'assemblage dans la fabrication du produit.

L'actionneur du dispositif de l'invention met en oeuvre des forces électrostatiques tangentielles qui s'exercent entre les doigts des peignes fixe et mobile. C'est ainsi que les peignes interdigités sont déplacés l'un par rapport à l'autre dans une direction parallèle aux doigts des peignes. Une telle solution permet d'obtenir de plus grandes amplitudes de déplacement de l'élément d'entraînement qu'avec les actionneurs à peignes interdigités utilisant uniquement les forces électrostatiques normales.

En outre, pour que le dispositif supporte de telles amplitudes de déplacement de l'élément d'entraînement, la gravure réalisée est une gravure profonde (épaisseur de gravure supérieure à 10µm). Ainsi, les différents éléments du dispositif présentent des épaisseurs suffisantes pour ne pas induire des déplacements parasites (flambement) lorsqu'ils sont sollicités.

En particulier, la réalisation d'éléments présentant des dimensions latérales (c'est-à-dire les dimensions dans le plan de déplacement des différents éléments) de l'ordre du millimètre requiert que l'épaisseur des éléments (correspondant à l'épaisseur de gravure) soit suffisante pour éviter des flambements.

Dans le dispositif de l'invention, le mouvement de l'élément entraîné est généré par un élément d'entraînement qui est déplacé selon un mouvement d'hystérésis. Il en résulte que l'élément entraîné est déplacé dans un mouvement pas à pas, avec un pas supérieur à 10 µm.

La présence de dents sur l'élément entraîné permet un indexage précis de son positionnement.

Ce dispositif peut ainsi être avantageusement utilisé comme dispositif d'horloge.

Ce dispositif ne nécessite aucun système démultiplicateur ou réducteur. L'élément d'entraînement est par conséquent moins encombrant que les dispositifs classiques.

L'ensemble des éléments du dispositif est formé en utilisant la technologie MEMS, par gravure dans un bloc en matériau semi-conducteur. Le dispositif forme ainsi un composant intégré dont toutes les fonctions sont réalisées en une seule opération de gravure.

Le dispositif obtenu par le procédé selon l'invention comprend en outre :
- un élément d'indexage apte à engrener séquentiellement avec la roue dentée,
- un actionneur apte à déplacer l'élément d'indexage selon un mouvement synchronisé avec le mouvement d'hystérésis de l'élément d'entraînement, de façon à ce que l'élément d'indexage engrène avec des dents de la roue lorsque l'élément d'entraînement n'engrène pas avec des dents de la roue, afin de maintenir la roue en position.

D'autres caractéristiques et avantages ressortiront encore de la description qui suit, laquelle est purement illustrative et non limitative et doit être lue en regard des figures annexées parmi lesquelles :
- la figure 1 représente de manière schématique les éléments composant un exemple de dispositif selon l'invention, ce dispositif constituant dans cet exemple un dispositif d'horloge,
- la figure 2 représente plus en détail un actionneur d'entraînement du dispositif de la figure 1,
- les figures 3A à 3D représentent schématiquement les étapes successives de fonctionnement de l'actionneur d'entraînement,
- la figure 4 représente le mouvement d'hystérésis imprimé à un élément d'entraînement par rapport à la roue pendant un cycle,
- les figures 5A à 5D représentent les positions A, B, C et D prises par l'élément d'entraînement par rapport aux dents de la roue ainsi que l'avancement élémentaire Δ produit par un cycle de déplacement de l'élément d'entraînement,
- les figures 6A à 6D représentent les signaux d'adressage appliqués modules élémentaires de l'actionneur,
- les figures 7A à 7D illustrent des étapes d'un procédé de fabrication du dispositif d'horloge selon une technique SOI,
- les figures 8A à 8H illustrent des étapes d'un procédé de fabrication du dispositif d'horloge selon une technique HARPSS,
- la figure 9 représente un actionneur d'indexage pouvant être utilisé dans une variante de réalisation de l'invention,
- la figure 10 représente de manière schématique l'utilisation d'un actionneur d'entraînement conforme à celui de la figure 2 en conjonction avec un actionneur d'indexage,
- les figures 11A à 11 F représentent les positions A, B, C et D prises par l'élément d'entraînement par rapport aux dents de la roue ainsi que les positions E et F prises par l'élément d'indexage
- les figures 12A à 12F représentent les signaux d'adressage appliqués aux modules élémentaires de l'actionneur d'entraînement et à l'actionneur d'indexage,
- la figure 13 représente le jeu j pouvant apparaître entre des éléments du dispositif avec les techniques de fabrication connues.

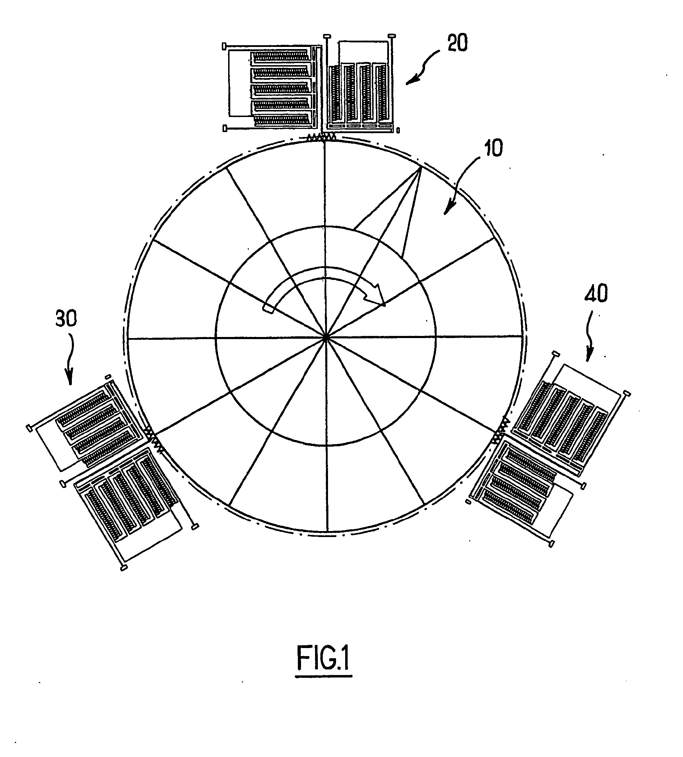

Sur la figure 1, le dispositif comprend une roue circulaire dentée 10 pouvant être entraînée en rotation par trois actionneurs d'entraînement 20, 30, 40 répartis autour de la roue et formant entre eux des angles de 120 degrés.

Le dispositif de la figure 1 présente la particularité d'être un dispositif intégré. Les éléments composant le dispositif sont formés simultanément par gravure dans un bloc unique en matériau semi-conducteur. La portion de bloc gravée présente une épaisseur supérieure à 10 µm. La portion de bloc non gravée supportant l'ensemble des éléments constitue le substrat.

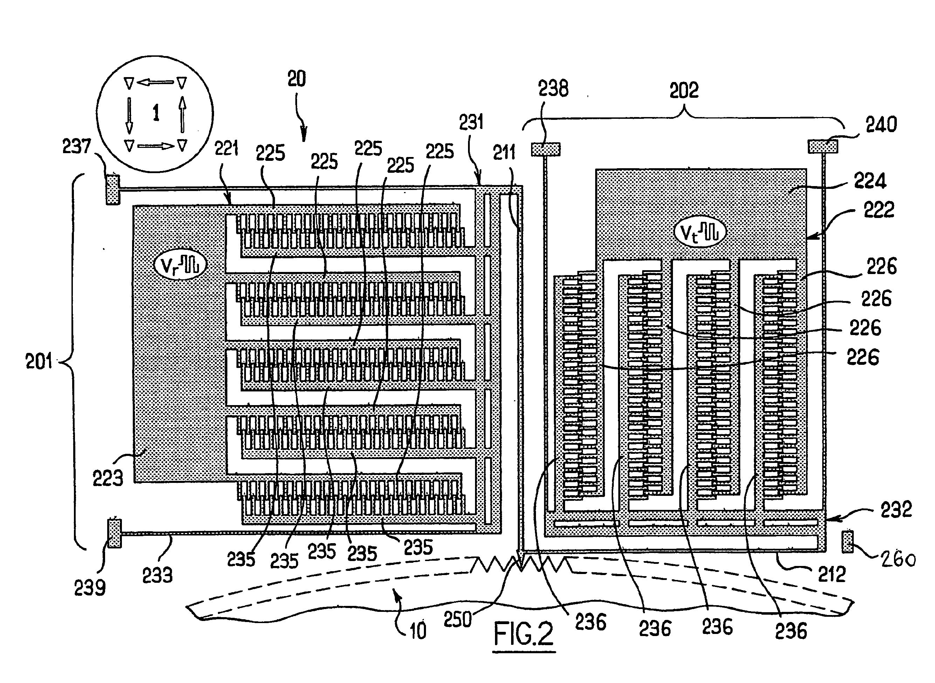

La figure 2 représente plus en détail l'un des actionneurs d'entraînement 20 de la figure 1. L'actionneur d'entraînement 20 se compose principalement d'un module élémentaire d'actionnement radial 201, d'un module élémentaire d'actionnement tangentiel 202 et d'un élément d'entraînement sous la forme d'une dent 250.

La dent d'entraînement 250 présente une forme triangulaire. Elle s'étend à proximité de la roue 10 avec la pointe dirigée vers la roue, dans une direction radiale par rapport à celle-ci. La dent d'entraînement 250 est ainsi apte à engrener avec les dents de la roue 10.

Dans la suite du texte, l'expression « radial » qualifie tout élément s'étendant suivant une direction radiale par rapport à la roue 10 et l'expression « tangentiel » qualifie tout élément s'étendant suivant une direction tangentielle par rapport à la roue, les directions radiale et tangentielle étant considérées au point de la roue où est localisée la dent d'entraînement.

L'expression « fixe » qualifie tout élément encastré sur le substrat et l'expression « mobile » qualifie tout élément maintenu à quelques microns d'altitude du substrat, au moyens de suspensions élastiques également encastrées sur le substrat.

La dent d'entraînement 250 est reliée par une tige radiale 211 au module d'actionnement radial et par une tige tangentielle 212 au module d'actionnement tangentiel.

Les modules d'actionnement radial 201 et tangentiel 202 sont des modules électrostatiques présentant une structure à peignes (connus sous l'appellation anglo-saxonne de « comb drive »). Ce type de structure comprend des paires de peignes interdigités.

On va décrire de manière plus précise les modules d'actionnement radial 201 et tangentiel 202 de la structure de l'actionneur 20.

Le module d'actionnement radial 201 est formé d'une partie fixe 221 et d'une partie mobile 231 à laquelle est reliée la tige radiale 211.

La partie fixe 221 comprend une électrode radiale 223 à partir de laquelle s'étendent suivant une direction tangentielle un ensemble de peignes fixes parallèles 225. Chaque peigne 225 est formé d'une tige principale et d'une série de doigts ou cils parallèles connectés à la tige et s'étendant perpendiculairement par rapport à celle-ci.

La partie mobile 231 comprend un cadre mobile 233 présentant une forme générale en U et s'étendant autour de la partie fixe 221. Le cadre mobile 233 est connecté à chacune de ses extrémités au substrat au moyen de liaisons encastrement 237, 239 constituant des suspensions élastiques. Des peignes 235 s'étendent à partir du cadre mobile 233 dans une direction générale radiale. Ces peignes 235 sont formés d'une tige principale et d'une série de doigts ou cils parallèles connectés à la tige et s'étendant perpendiculairement à celle-ci.

Les peignes 225 de la partie fixe 221 et les peignes 235 de la partie mobile 231 sont disposés parallèlement les uns aux autre et intercalés les uns avec les autres. En outre, chaque peigne mobile 235 est disposé en regard d'un peigne fixe 225 de sorte que leurs doigts s'intercalent les uns entre les autres, formant ainsi une paire de peignes dits « interdigités ».

Le module d'actionnement tangentiel 202 présente une structure similaire à celle du module d'actionnement radial 201, excepté qu'il est orienté perpendiculairement à ce dernier. Il est formé d'une partie fixe 222 et d'une partie mobile 232 à laquelle est reliée la tige tangentielle 211.

La partie fixe 222 comprend une électrode tangentielle 224 à partir de laquelle s'étendent suivant une direction radiale un ensemble de peignes fixes parallèles 226.

La partie mobile 232 comprend un cadre mobile 232 connecté a chacune de ses extrémités au substrat au moyen de liaisons encastrement 238, 240 constituant des suspensions élastiques. Des peignes 236 s'étendent à partir du cadre mobile 232 dans une direction générale tangentielle.

Les peignes 226 de la partie fixe 222 et les peignes 236 de la partie mobile 232 sont disposés parallèlement les uns aux autre et intercalés les uns avec les autres. En outre, chaque peigne mobile 236 est disposé en regard d'un peigne fixe 226 de sorte que leurs doigts s'intercalent les uns entre les autres, formant ainsi une paire de peignes interdigités.

On va maintenant décrire le fonctionnement des modules radial et tangentiel.

Les doigts intercalés des peignes interdigités s'apparentent à des condensateurs plans dont l'une des armatures est reliée à l'électrode 223 ou 222 et l'autre armature est reliée à la masse via les liaisons encastrement 237, 239 ou 238, 240.

Lorsqu'une tension est appliquée à l'électrode radiale 223, cette tension crée une différence de potentiels entre la partie fixe 221 et la partie mobile 231 du module d'actionnement 201. Un champ électrique s'établit entre les armatures des condensateurs formées par les doigts des peignes 225 et 235. Ce champ électrique génère une force électrostatique tangentielle qui tend à déplacer les peignes mobiles 235 est apte à être déplacé par rapport aux peignes fixes 225 selon une direction parallèle aux doigts des peignes et à déplacer l'élément d'entraînement 250 dans une direction correspondante.

La force électrostatique tangentielle s'exerçant entre les doigts de peignes entraîne la déformation du cadre 233 et par conséquent la translation de la dent d'entraînement 250 par action de la tige 211 dans une direction radiale par rapport à la roue 10. Le cadre 233 autorise un déplacement des peignes mobiles 235 uniquement dans la direction des doigts.

De même, le même phénomène se produit lorsqu'une tension est appliquée à l'électrode 224. La force électrostatique créée entraîne la déformation du cadre 232 et la translation de la dent d'entraînement 250 par action de la tige 212 dans une direction tangentielle par rapport à la roue 10. Le cadre 232 autorise un déplacement des peignes mobiles 236 uniquement dans la direction des doigts.

Le module d'actionnement tangentiel 202 comprend une butée 260 permettant de limiter l'amplitude du mouvement du cadre mobile pour maintenir la partie mobile 232 à distance de la partie fixe 222 et éviter que les peignes mobiles 236 ne viennent en contact avec les peignes fixes 226. En effet, la mise en contact des peignes génèrerait une force électrostatique normale trop importante entre les peignes et pourrait entraîner l'effondrement du dispositif.

Le déplacement du cadre du module d'actionnement radial 201 est quant à lui limité par la présence de la roue dentée 10 qui limite le mouvement de la dent d'entraînement 250 en direction radiale.

On notera que la flexibilité latérale de chacune des tiges permet la déformation de celle-ci sous l'action de l'autre tige. Les deux tiges flexibles radiale et tangentielle 211 et 212 assurent un découplage mécanique des deux modules d'actionnement 201 et 202. En effet, la flexibilité des tiges autorise un déplacement de la dent d'entraînement indépendamment suivant deux degrés de liberté élémentaires, à savoir : suivant les deux directions de translation radiale et tangentielle.

Le découplage des modules d'actionnement 201 et 202 permet de les disposer selon une configuration en parallèle. La configuration en parallèle des deux modules d'actionnement 201 et 202 (par opposition à une configuration en série) améliore l'accessibilité aux électrodes 223 et 224 pour la mise en place de connectiques d'alimentation.

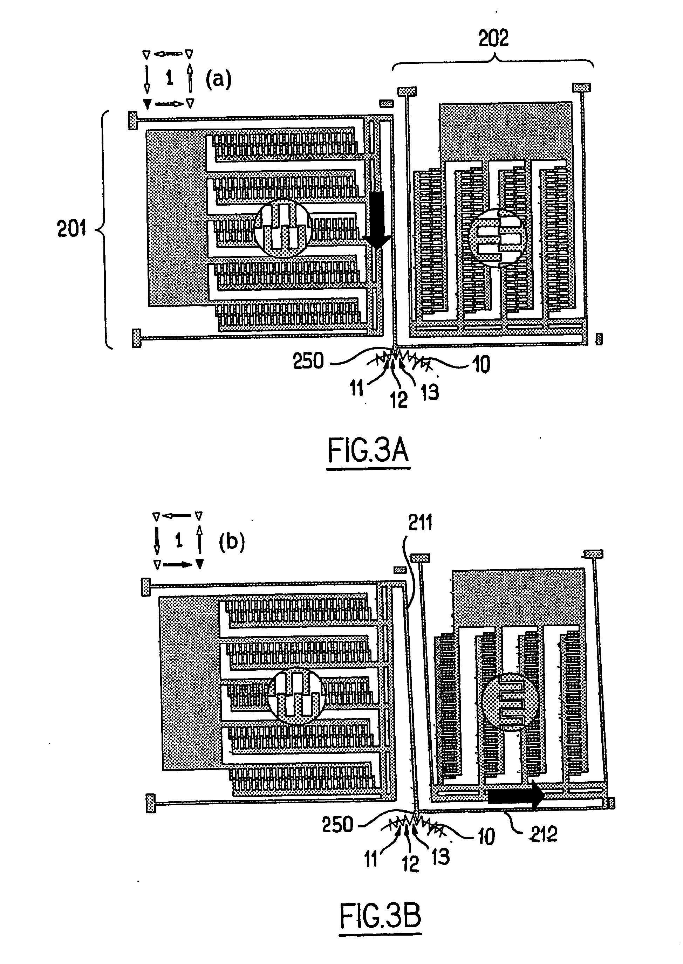

Les figures 3A à 3D illustrent les étapes successives de fonctionnement de l'actionneur 20, permettant de générer un mouvement cyclique d'hystérésis de la dent d'entraînement 250.

Sur la figure 3A, le module élémentaire d'actionnement radial 201 et le module élémentaire d'actionnement tangentiel 202 sont au repos. A cette étape, la dent d'entraînement 250 est disposée entre des dents 12 et 13 de la roue dentée 10.

Sur la figure 3B, le module d'actionnement tangentiel 202 est commandé de manière à exercer sur la dent d'entraînement 250 une force tangentielle par l'intermédiaire de la tige tangentielle 212. La dent 250 est alors déplacée tangentiellement à la roue 10, dans le sens horaire (comme indiqué par la flèche). La tige 211 est déformée. A cette étape la dent d'entraînement 250 engrène avec la dent 13 de la roue 10 et entraîne celle-ci en rotation.

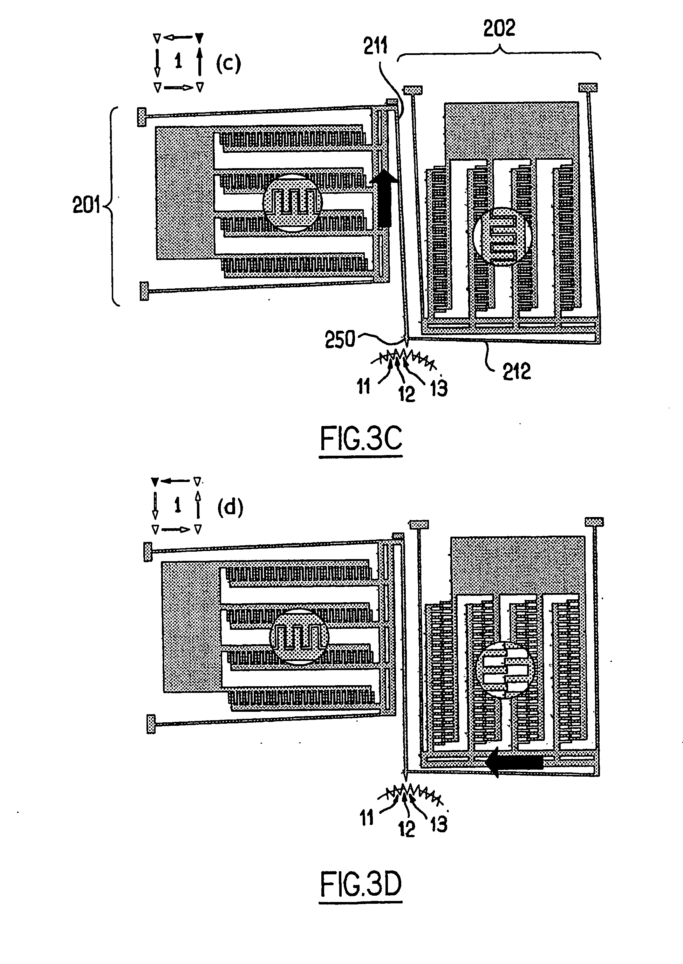

Sur la figure 3C, le module d'actionnement radial 201 est commandé de manière à exercer sur la dent d'entraînement une force radiale par l'intermédiaire de la tige radiale 211. A cette étape, la dent d'entraînement 250 est écartée de la roue 10 (comme indiqué par la flèche) de sorte qu'elle n'engrène plus avec celle-ci. La dent 250 est alors débrayée.

Sur la figure 3D, le module d'actionnement tangentiel 202 est au repos. La dent 250 est alors déplacée tangentiellement à la roue 10, dans le sens anti-horaire (comme indiqué par la flèche) pour être positionnée en face des dents 11 et 12.

L'étape de la figure 3A est alors renouvelée. Le module d'actionnement radial 201 et le module d'actionnement tangentiel 202 sont à nouveau au repos. La dent d'entraînement 250 est alors déplacée vers la roue et disposée entre les dents 11 et 12 de celle-ci.

Le mouvement d'hystérésis de la dent d'entraînement 250 alterne les phases d'entraînement (figures 3A et 3B) et de débrayage (figures 3C et 3D). Ce mouvement permet à la dent d'entraînement 250 d'engrener avec les dents successives de la roue 10 et d'entraîner la roue 10 dans un mouvement de rotation pas à pas dans le sens horaire. La roue 10 est entraînée en rotation, et ce par des excursions de l'élément d'entraînement d'amplitude réduites (de l'ordre du micromètre).

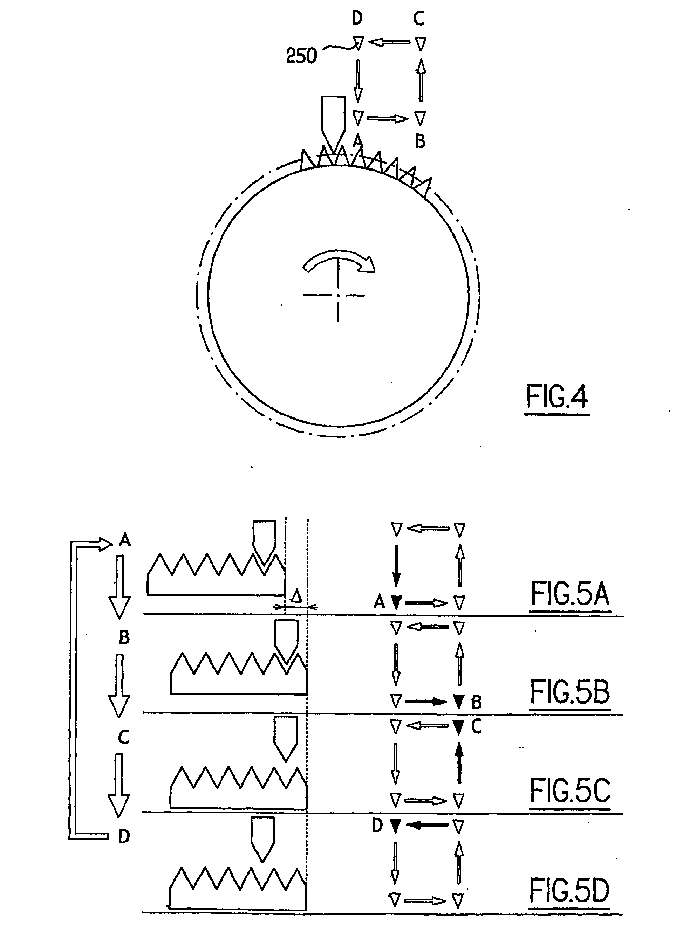

La figure 4 représente le mouvement d'hystérésis imprimé à la dent 250 par rapport à la roue pendant un cycle.

Les figures 5A à 5D représentent les positions A, B, C et D prises par la dent d'entraînement 250 par rapport aux dents de la roue. Cette figure illustre également l'avancement élémentaire Δ de la roue 10 généré par un cycle de déplacement de la dent 250.

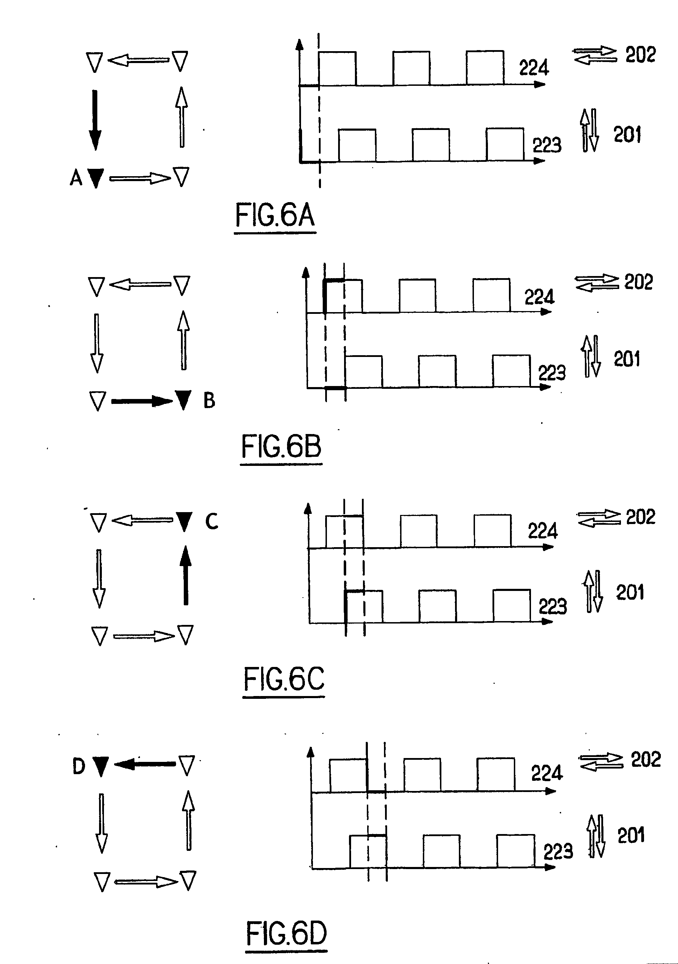

Les figures 6A à 6D représentent les signaux d'adressage appliqués aux électrodes 224 et 223 des modules d'actionnement tangentiel 202 et radial 201. Ces signaux sont des signaux périodiques en créneau, le signal de commande de l'électrode 223 étant déphasé d'un quart de période par rapport au signal de commande de l'électrode 224.

La fréquence des signaux d'adressage dépend du pas Δ de la roue dentée 10 et de son diamètre. En considérant par exemple que la roue 10 est liée à l'aiguille des secondes (trotteuse), la fréquence d'adressage des modules d'actionnement est de l'ordre de 10 Hz. Les fréquences d'adressage seront divisées par 60 et 720 respectivement pour les aiguilles des minutes et des heures.

Les modules d'actionnement 201 et 202 peuvent être commandés par d'autres types de signaux périodiques présentant un déphasage l'un par rapport à l'autre strictement compris entre 0 et une demi période.

On va maintenant décrire les étapes d'un procédé de fabrication du dispositif d'horloge selon une technique SOI (Silicon-On-Insulator).

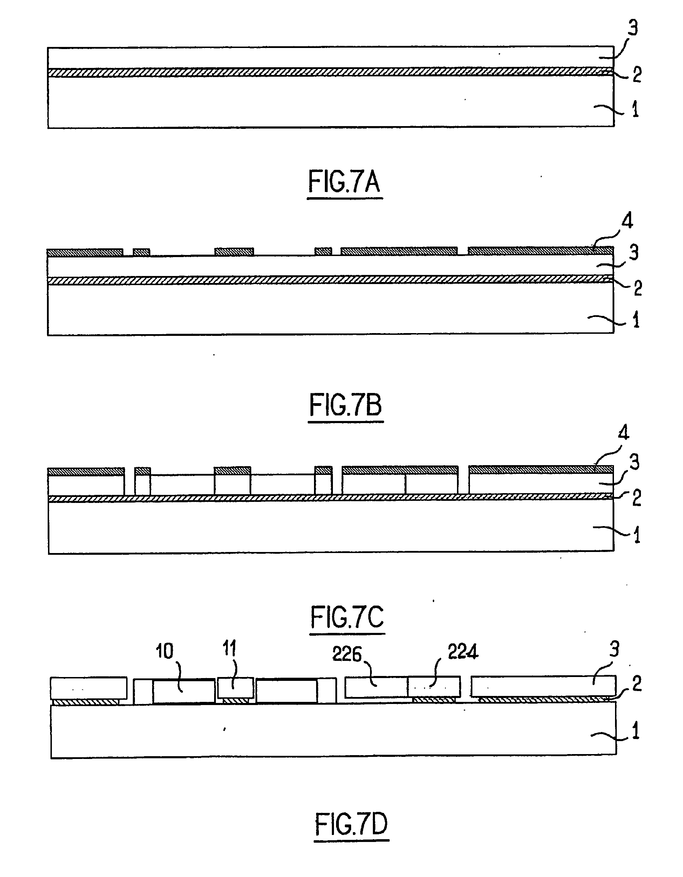

Selon une première étape de fabrication représentée à la figure 7A, on forme un bloc en déposant sur une couche 1 de substrat en silicium présentant une épaisseur de l'ordre de 360 microns, une couche 2 d'oxyde de silicium présentant une épaisseur d'environ 2 microns puis une couche 3 de silicium présentant une épaisseur de l'ordre de 50 à 100 microns.

Selon une deuxième étape représentée à la figure 7B, on dépose sur le bloc une couche de résine 4 selon un motif délimitant les différents éléments du dispositif d'horloge. Cette couche 4 de résine forme un masque destiné à protéger certaines parties du bloc. La résine est classiquement déposée par une technique de photolithographie permettant de définir par projection des formes géométriques planes avec une précision de l'ordre du micromètre.

Selon une troisième étape représentée à la figure 7C, les parties du bloc non protégées par le masque sont gravées jusqu'à la couche d'oxyde de silicium 2 qui constitue une couche d'arrêt. A cet effet, différentes techniques de gravure existent. Le bloc peut par exemple être exposé à un bombardement ionique (Reactive Ion Etching) qui dissout la couche de silicium.

La couche de résine 4 est ensuite éliminée en appliquant un solvant.

Selon une quatrième étape représentée à la figure 7D, la couche d'oxyde de silicium 2 est dissoute par une solution d'acide fluorhydrique. Les zones dissoutes libèrent les parties mobiles du mécanisme (roue, peignes mobiles, tiges). La roue 10 est complètement libérée de la couche de substrat 1. Elle est maintenue dans son logement par un moyeu central fixe 11 constituant son axe de rotation.

Le dispositif d'horloge peut également être fabriqué selon une technique HARPSS (High Aspect Ratio combined Poly and Single-cristal Silicon).

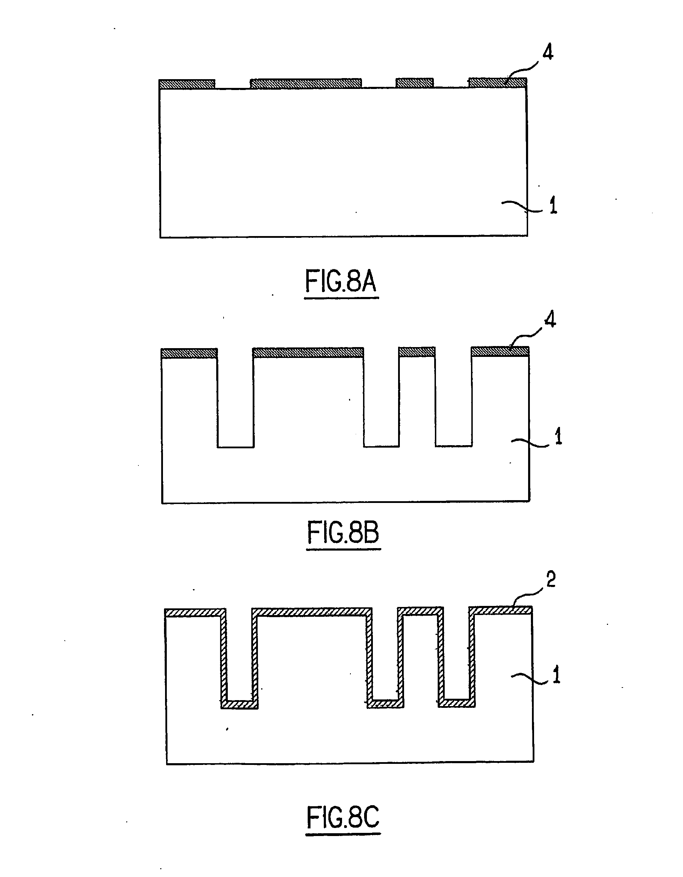

Selon une première étape de fabrication représentée à la figure 8A, un bloc constitué d'une couche 1 de silicium ou wafer est recouvert d'une couche de résine 4 selon un motif déterminant les formes de la structure interne des différents éléments du futur dispositif d'horloge.

Selon une deuxième étape représentée à la figure 8B, les parties du bloc non protégées sont gravées. Une contrainte de l'utilisation de la technologie HARPSS est que les motifs doivent présenter une largeur identique partout afin de garantir une profondeur de gravure constante sur toute la surface du wafer (environ 50 à 100 microns).

La couche de résine 4 est ensuite éliminée en appliquant un solvant.

Selon une troisième étape représentée à la figure 8C, le wafer est recouvert d'une couche d'oxyde silicium 2 d'environ 1 micron d'épaisseur. Cette couche d'oxyde de silicium recouvre les parois verticales des motifs gravés et constitue une couche d'arrêt.

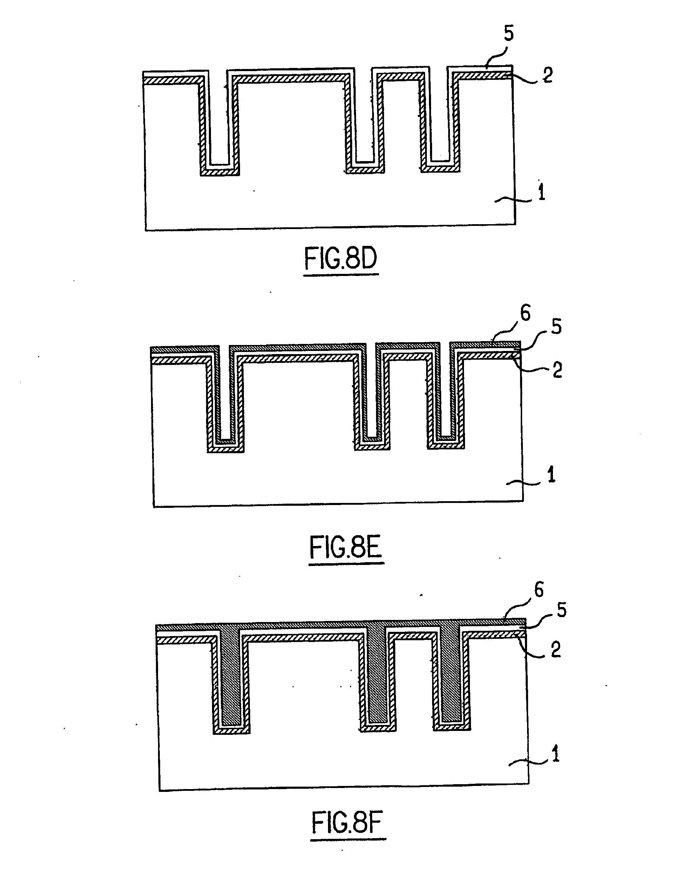

Selon une quatrième étape représentée à la figure 8D, on dépose sur la couche d'oxyde de silicium 2, une couche 5 de nitrure de 0,5 microns d'épaisseur destinée à isoler les futures éléments du dispositif d'horloge du substrat et également les uns des autres.

Selon une cinquième étape représentée à la figure 8E, on effectue un premier dépôt de polysilicium 6 sur la couche de nitrure 5, ce premier dépôt étant destiné à recouvrir les parois verticales des motifs gravés.

Selon une sixième étape représentée à la figure 8F, on effectue un deuxième dépôt de polysilicium 6 pour combler les espaces formés par les motifs gravés et achever la structure verticale.

Le dépôt du polysilicium en deux étapes permet de garantir un dopage complet de la couche de polysilicium sur toute la hauteur des motifs gravés.

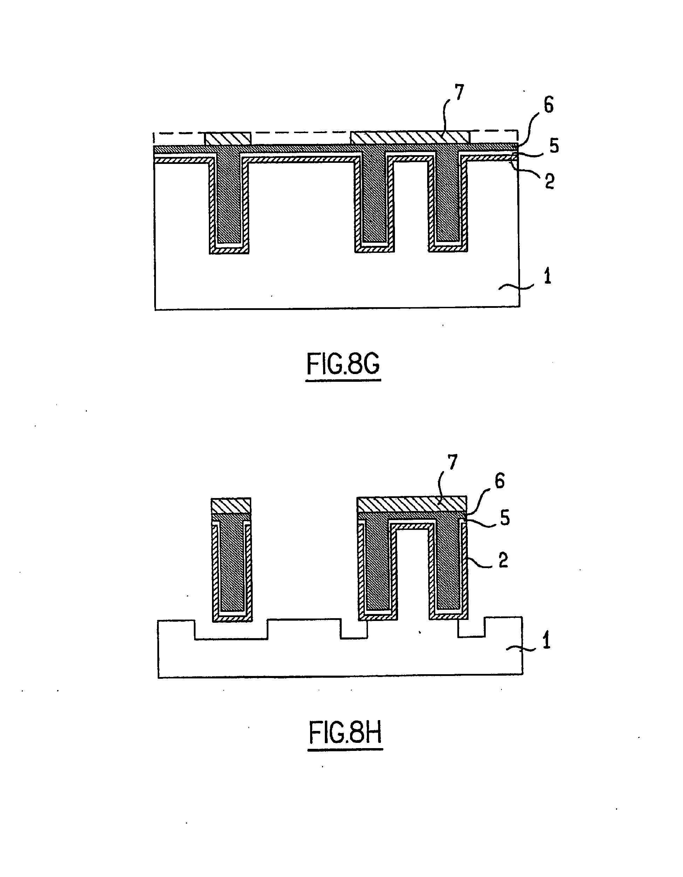

Selon une septième étape, représentée à la figure 8G, le wafer est recouvert d'une couche de résine 7 selon un motif délimitant les différents éléments du dispositif d'horloge.

Selon une huitième étape représentée à la figure 8H, les parties du bloc non protégées par le masque de résine 7 sont gravées. La couche verticale d'oxyde de silicium 2 constitue des murs d'arrêt qui limitent l'action de gravure. Cette couche d'oxyde de silicium permet également de graver le wafer sous les structures verticales de manière à détacher les parties mobiles du mécanisme (roue, peignes mobiles, tiges).

La présente invention peut trouver de nombreuses applications, par exemple sous forme d'un moteur de chronomètre.

La présente invention permet une alimentation des actionneurs à fréquence élevée. Elle autorise par conséquent une rotation à une vitesse de plusieurs milliers de tours par minute.

La présente invention se prête en particulier à la réalisation des dispositifs précédemment décrits au moyen d'un procédé collectif dérivé de la technologie des circuits intégrés, ce qui signifie que plusieurs centaines d'horloges sont simultanément gravées dans un même bloc en matériau semi-conducteur.

La présente invention permet de simplifier considérablement les rouages d'entraînement classiques en remplaçant les trains d'engrenages ou réducteurs auxiliaires de vitesse traditionnels par une roue dentée unique 10, solidaire de l'aiguille à entraîner.

Le dispositif d'actionnement 20 proposé présente l'avantage d'être réversible. En sens de rotation horaire de l'élément entraîné, les forces électrostatiques tangentielles s'exerçant entre les dents des peignes interdigités sont motrices. En sens de rotation anti-horaire, ce sont les forces élastiques de rappel s'exerçant notamment sur les cadres mobiles qui sont motrices.

Le dispositif d'actionnement proposé est en liaison directe avec l'élément entraîné et il présente une faible consommation en énergie.

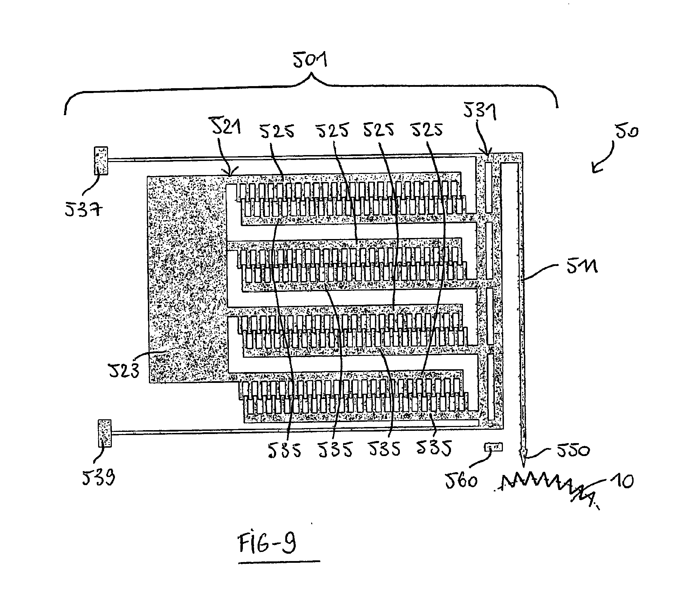

La figure 9 représente un actionneur d'indexage 50 pouvant être utilisé en combinaison avec un actionneur d'entraînement. L'actionneur d'indexage 50 se compose d'un module d'actionnement radial unique 501 et d'un élément d'entraînement sous la forme d'une dent 550. Le module d'actionnement radial 501 est similaire au module d'actionnement radial 201 de l'actionneur d'entraînement 20.

Le module d'actionnement radial 501 est formé d'une partie fixe 521 et d'une partie mobile 531 à laquelle est reliée une tige radiale 511.

La partie fixe 521 comprend une électrode radiale 523 à partir de laquelle s'étendent suivant une direction tangentielle un ensemble de peignes fixes parallèles 525. Chaque peigne 525 est formé d'une tige principale et d'une série de doigts ou cils parallèles connectés à la tige et s'étendant perpendiculairement par rapport à celle-ci.

La partie mobile 531 comprend un cadre mobile 533 présentant une forme générale en U et s'étendant autour de la partie fixe 521. Le cadre mobile 533 est connecté à chacune de ses extrémités au substrat au moyen de liaisons encastrement 537, 539 constituant des suspensions élastiques. Des peignes 535 s'étendent à partir du cadre mobile 533 dans une direction générale radiale. Ces peignes 535 sont formés d'une tige principale et d'une série de doigts ou cils parallèles connectés à la tige et s'étendant perpendiculairement à celle-ci.

Les peignes 525 de la partie fixe 521 et les peignes 535 de la partie mobile 531 sont disposés parallèlement les uns aux autre et intercalés les uns avec les autres. En outre, chaque peigne mobile 535 est disposé en regard d'un peigne fixe 525 de sorte que leurs doigts s'intercalent les uns entre les autres, formant ainsi une paire de peignes dits « interdigités ».

La dent d'entraînement 550 présente une forme triangulaire. Elle s'étend à proximité de la roue 10 avec la pointe dirigée vers la roue, dans une direction radiale par rapport à celle-ci. La dent d'entraînement 550 est ainsi apte à engrener avec les dents de la roue 10.

L'actionneur d'indexage 50 comprend en outre une butée 560 permettant de maintenir la partie mobile 531 à distance de la partie fixe 521 pour éviter que les peignes mobiles 535 ne viennent en contact avec les peignes fixes 525.

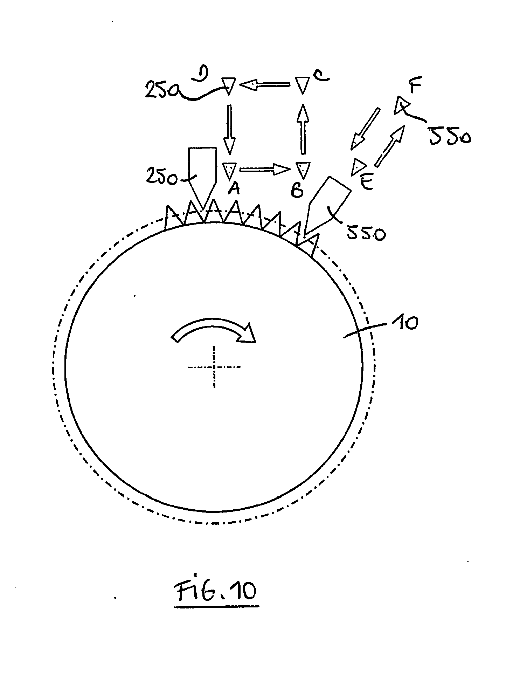

La figure 10 représente schématiquement les positions prises par les dents d'entraînement 250 et d'indexage 550 lorsque le dispositif est en fonctionnement.

Le module d'indexage 501 de l'actionneur d'indexage 50 est commandé en synchronisation avec les modules élémentaires d'actionnement radial 201 et tangentiel 202 de l'actionneur d'entraînement. L'actionneur d'indexage a pour fonction de maintenir la roue 10 en position lorsque la dent 250 de l'actionneur d'entraînement est en débrayé (dans les positions C et D). La conjonction de l'actionneur d'entraînement et de l'actionneur d'indexage permet un contrôle précis du positionnement de la roue 10.

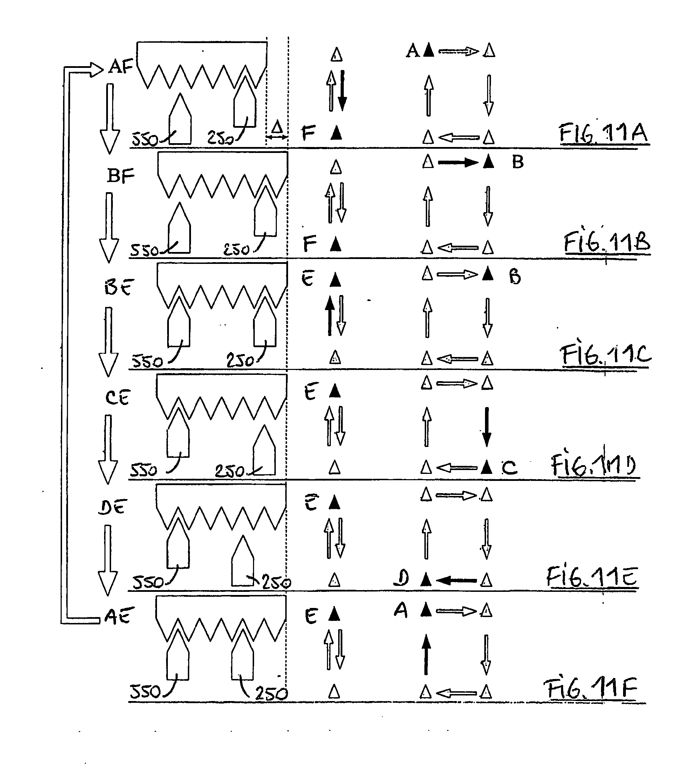

Les figures 11A à 11F représentent les positions A, B, C et D prises par la dent d'entraînement 250 et les positions E et F prises par le dent d'indexage 550 par rapport aux dents de la roue 10 au cours d'un cycle de la dent d'entraînement 250. Cette figure illustre également l'avancement élémentaire Δ de la roue 10 généré par un cycle de déplacement de la dent 250.

L'actionneur d'indexage 50 est commandé pour déplacer la dent 550 selon un mouvement alternatif radial par rapport à la roue 10. Le mouvement de la dent 550 est synchronisé avec celui de la dent 250. Lorsque la dent d'entraînement 250 engrène avec la roue 10 et entraîne celle-ci en rotation (figures 11A et 11B), la dent d'indexage 550 est débrayée (en position F). Lorsque la dent d'entraînement 250 est débrayée (figures 10C à 10F), la dent d'indexage 550 est insérée entre des dents de la roue 10 (en position E) pour maintenir la roue dans sa position.

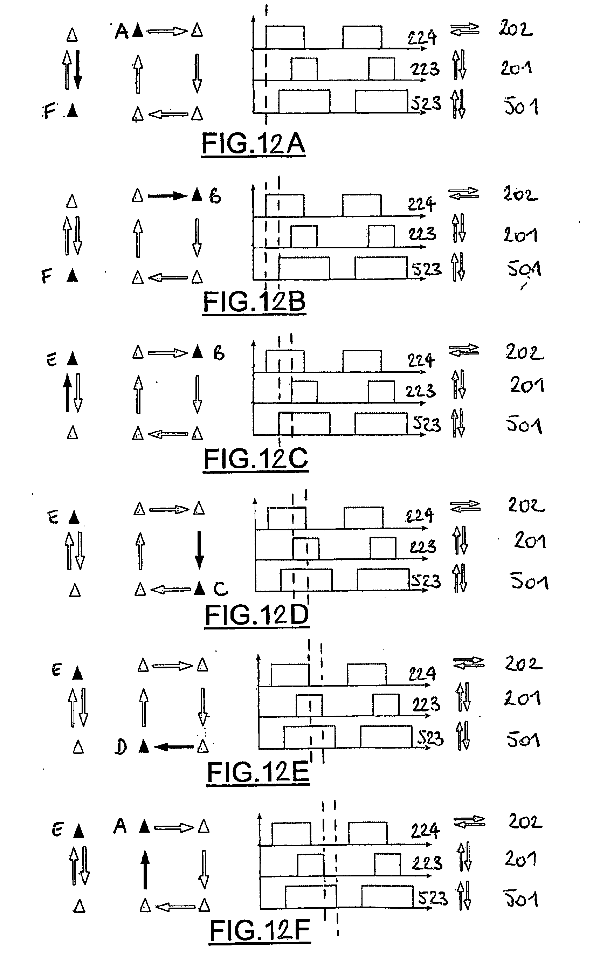

Les figures 12A à 12F représentent les signaux d'adressage appliqués aux électrodes 224 et 223 des modules d'actionnement tangentiel 202 et radial 201 de l'actionneur d'entraînement 20 et à l'électrode 523 du module d'indexage 501. Ces signaux sont des signaux périodiques en créneau. Le signal de commande de l'électrode 223 est déphasé d'un quart de période par rapport au signal de commande de l'électrode 224.

Comme on peut le constater sur les figures 6A et 12F, la dent d'entraînement 250 de l'actionneur d'entraînement 20 se trouve en position engrenée (position A) lorsque aucun signal n'est appliqué aux électrodes 224 et 223. Ceci permet que lorsque le dispositif n'est pas alimenté en énergie, l'indexage de la roue est assuré par la dent 250 et génère en outre une consommation moindre en énergie.

La caractéristique selon laquelle la dent 250 est en position engrenée (position A) lorsque l'actionneur 20 est au repos est directement liée au procédé de fabrication du dispositif auto-assemblé. En effet, le motif de gravure appliqué au bloc de matériau semi-conducteur comprend la dent 250 en position engrenée entre deux dents de la roue 10.

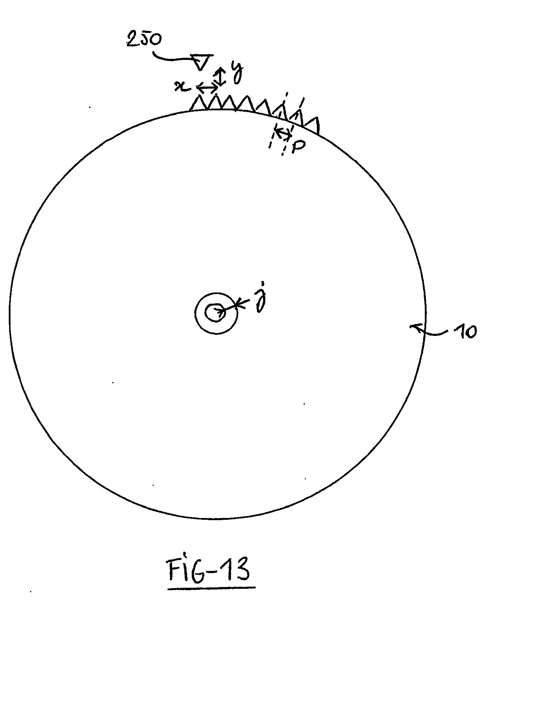

Avec les techniques actuelles de réalisation de dispositifs MEMS, notamment les techniques SOI et HARPSS décrites précédemment, il apparaît des jeux incompressibles entre des éléments gravés. Comme illustré sur la figure 13, un tel jeu j existe par exemple entre la roue dentée 10 et son moyeu. Ce jeu est de l'ordre de 4 µm. Si le pas P des dents de la roue 10 n'est pas suffisant, le jeu j peut entraîner une incertitude concernant le positionnement de la roue. C'est pourquoi, le pas de la roue est choisi pour éviter une telle incertitude. Le pas P est de préférence supérieur à 10 µm. De même, pour obtenir un fonctionnement fiable du dispositif, les amplitudes de déplacement tangentiel (distance d'engrènement) x et radial (distance de débrayage) y sont choisies suffisamment importantes. Les distances d'engrènement et de débrayage x et y sont supérieures à 10 µm.

Des distances aussi importantes sont possibles grâce à l'utilisation des forces électrostatiques tangentielles générées entre les doigts des peignes interdigités des actionneurs ainsi que grâce à une épaisseur de gravure supérieure à 10µm

A titre d'exemple non limitatif les principaux ordres de grandeurs caractéristiques des dispositifs d'horloges conformes à la présente invention sont les suivants :
- Diamètre de la roue dentée 10 de l'ordre de 2 mm (ce diamètre peut cependant être réduit à quelques centaines de microns)
- Pas de roue dentée 10 : 15 microns
- Largeur des cils élémentaires (226) : 3 microns
- Largeur de l'entrefer (gap d'air entre deux doigts ou cils) : 2 microns
- Longueur d'un peigne : typiquement quelques centaines de microns
- Surface d'un module actionneur (radial ou tangentiel) : ~ 0.25mm²
- Epaisseur (ou altitude) de l'horloge (couche "SOI") : 50 microns
- Epaisseur du substrat : - 360 microns

## Revendications

1. Procédé de formation d'un dispositif auto-assemblé, le procédé comportant une étape de gravure dans un bloc en matériau semi-conducteur, la gravure étant pratiquée dans une épaisseur supérieure à 10µm, de telle manière à former un dispositif comprenant les éléments suivants :
- un élément entraîné denté (10),
- un élément d'entraînement (250) apte à engrener séquentiellement avec l'élément entraîné denté (10),
- un actionneur (20) apte à déplacer l'élément d'entraînement (250) selon un mouvement d'hystérésis de sorte que l'élément d'entraînement (250) engrène avec des dents (11, 12, 13) successives de l'élément entraîné (10),
l'actionneur (20) incluant un module d'actionnement (201, 202) comprenant au moins un peigne fixe (225, 226) et un peigne mobile (235, 236), chaque peigne incluant une série de doigts, le peigne mobile (235, 236) étant disposé en regard du peigne fixe (225, 226) de sorte que des doigts du peigne fixe et des doigts du peigne mobile s'intercalent les uns entre les autres,
le peigne mobile (235, 236) étant apte à être déplacé par rapport au peigne fixe (225, 226) selon une direction parallèle aux doigts des peignes lors de l'application d'une différence de potentiels entre le peigne fixe et le peigne mobile, pour déplacer l'élément d'entraînement (250) dans une direction correspondante.

2. Procédé selon la revendication 1, dans lequel l'actionneur comprend un premier module d'actionnement (201) apte à déplacer l'élément d'entraînement (250) selon une première direction et un deuxième module d'actionnement (202) apte à déplacer l'élément d'entraînement (250) dans une deuxième direction, les modules d'actionnement (201, 202) étant aptes à être commandés simultanément pour générer un mouvement combiné d'hystérésis de l'élément d'entraînement (250).

3. Procédé selon la revendication 2, dans lequel le premier module d'actionnement (201) est apte à déplacer l'élément d'entraînement (250) selon une direction radiale par rapport à l'élément entraîné (10) et le deuxième module d'actionnement (202) est apte à déplacer l'élément d'entraînement (250) selon une direction tangentielle par rapport à l'élément entraîné (10).

4. Procédé selon l'une des revendications 2 ou 3, dans lequel l'élément d'entraînement (250) est relié par une tige flexible radiale (211) au module d'actionnement radial (201) et par une tige flexible tangentielle (212) au module d'actionnement tangentiel (202), les tiges flexibles (211, 212) autorisant le déplacement de l'élément d'entraînement (250) indépendamment sous l'action l'un ou l'autre des modules d'actionnement (201, 202).

5. Procédé selon l'une des revendications 2 à 4, dans lequel les modules d'actionnement (201, 202) sont commandés par des signaux périodiques présentant un déphasage l'un par rapport à l'autre strictement compris entre 0 et une demi période.

6. Procédé selon la revendication 5, dans lequel les signaux périodiques présentent un déphasage d'un quart de période l'un par rapport à l'autre.

7. Procédé selon l'une des revendications qui précèdent, dans lequel le dispositif est gravé de sorte que l'élément d'entraînement (250) se trouve en position engrenée avec l'élément entraîné denté (10) lorsque aucun signal n'est appliqué à l'actionneur (20).

8. Procédé selon l'une des revendications qui précèdent, dans lequel le dispositif comprend en outre :
- un élément d'indexage (550) apte à engrener séquentiellement avec l'élément entraîné denté (10),
- un actionneur (50) apte à déplacer l'élément d'indexage (550) selon un mouvement synchronisé avec le mouvement d'hystérésis de l'élément d'entraînement (250), de façon à ce que l'élément d'indexage (550) engrène avec des dents de l'élément entraîné (10) lorsque l'élément d'entraînement (250) n'engrène pas avec des dents de l'élément entraîné, afin de maintenir l'élément entraîné (10) en position.

9. Procédé selon la revendication 8, dans lequel l'actionneur (50) inclut un module d'actionnement (501) comprenant au moins un peigne fixe (525) et un peigne mobile (535), chaque peigne incluant une série de doigts, le peigne mobile (535) étant disposé en regard du peigne fixe (525) de sorte que des doigts du peigne fixe et des doigts du peigne mobile s'intercalent les uns entre les autres, le peigne mobile (535) étant apte à être déplacé par rapport au peigne fixe (525) selon une direction parallèle aux doigts des peignes lors de l'application d'une différence de potentiels entre le peigne fixe et le peigne mobile, pour déplacer l'élément d'indexage (550) dans une direction correspondante.

10. Procédé selon la revendication 9, dans lequel le module d'indexage (501) est commandé par des signaux périodiques synchronisés avec des signaux de commande de l'actionneur d'entraînement (20).

11. Procédé selon l'une des revendications qui précèdent, dans lequel le dispositif est obtenu par une technique de gravure SOI.

12. Procédé selon l'une des revendications 1 à 10, dans lequel le dispositif est obtenu par une technique de gravure HARPSS.

13. Procédé selon l'une des revendications qui précèdent, dans lequel le dispositif est obtenu par un procédé collectif consistant à graver simultanément un grand nombre de dispositifs élémentaires d'horloge dans un bloc en matériau semi-conducteur.

14. Procédé selon l'une des revendications qui précèdent, dans lequel l'élément entraîné (10) est une roue dentée.

15. Procédé selon la revendication 14, dans lequel la roue (10) est directement solidaire d'une aiguille à entraîner.

## Patentansprüche

1. Verfahren zum Herstellen einer selbstorganisierten Vorrichtung, wobei das Verfahren einen Schritt zum Ätzen in einem Block aus Halbleitermaterial umfasst und wobei das Ätzen in einer Dicke ausgeführt wird, die über 10 µm liegt, und dies derart, dass eine Vorrichtung ausgebildet wird, die die folgenden Elemente umfasst:
- ein angetriebenes gezahntes Element (10),
- ein Antriebselement (250), das dafür eingerichtet ist, sequenziell mit dem angetriebenen gezahnten Element (10) ineinanderzugreifen,
- einen Aktor (20), der dafür eingerichtet ist, das Antriebselement (250) gemäß einer Hysteresebewegung derart zu verschieben, dass das Antriebselement (250) mit aufeinanderfolgenden Zähnen (11, 12, 13) des angetriebenen Elements (10) ineinandergreift,
wobei der Aktor (20) ein Antriebsmodul (201, 202) umfasst, das wenigstens einen feststehenden Kamm (225, 226) und einen beweglichen Kamm (235, 236) umfasst, wobei jeder Kamm eine Reihe von Zähnen umfasst und wobei der bewegliche Kamm (235, 236) dem feststehenden Kamm (225, 226) gegenüberstehend angeordnet ist, und dies derart, dass Zähne des feststehenden Kamms und Zähne des beweglichen Kamms ineinander geschoben sind,
wobei der bewegliche Kamm (235, 236) dafür eingerichtet ist, relativ zum feststehenden Kamm (225, 226) verschoben zu werden, und dies in einer Richtung parallel zu den Zähnen der Kämme und bei Anwendung eines Potentialunterschieds zwischen dem feststehenden Kamm und dem beweglichen Kamm, um das Antriebselement (250) in einer entsprechenden Richtung zu verschieben.

2. Verfahren nach Anspruch 1, bei dem der Aktor ein erstes Antriebsmodul (201) umfasst, das dafür eingerichtet ist, das Antriebselement (250) in einer ersten Richtung zu verschieben, und ein zweites Antriebsmodul (202) umfasst, das dafür eingerichtet ist, das Antriebselement (250) in einer zweiten Richtung zu verschieben, wobei die Antriebsmodule (201, 202) dafür eingerichtet sind, gleichzeitig gesteuert zu werden, um eine kombinierte Hysteresebewegung des Antriebselements (250) zu erzeugen.

3. Verfahren nach Anspruch 2, bei dem das erste Antriebsmodul (201) dafür eingerichtet ist, das Antriebselement (250) in einer radialen Richtung relativ zum angetriebenen Element (10) zu verschieben, und das zweite Antriebsmodul (202) dafür eingerichtet ist, das Antriebselement (250) in einer tangentialen Richtung relativ zum angetriebenen Element (10) zu verschieben.

4. Verfahren nach einem der Ansprüche 2 oder 3, bei dem das Antriebselement (250) über eine radiale biegsame Stange (211) mit dem radialen Antriebsmodul (201) und über eine tangentiale biegsame Stange (212) mit dem tangentialen Antriebsmodul (202) verbunden ist, wobei unter der Einwirkung des einen oder des anderen von den Antriebsmodulen (201, 202) die biegsamen Stangen (211, 212) das unabhängige Verschieben des Antriebselements (250) gestatten.

5. Verfahren nach einem der Ansprüche 2 bis 4, bei dem die Antriebsmodule (201, 202) durch periodische Signale gesteuert werden, die gegeneinander eine Phasenverschiebung aufweisen, die streng' zwischen 0 und einer halben Periode liegt.

6. Verfahren nach Anspruch 5, bei dem die periodischen Signale eine Phasenverschiebung von einer viertel Periode gegeneinander aufweisen.

7. Verfahren nach einem der vorhergehenden Ansprüche, bei dem die Vorrichtung derart geätzt wird, dass das Antriebselement (250) sich in einer Eingriffsposition mit dem angetriebenen gezahnten Element (10) befindet, wenn auf den Aktor (20) kein Signal angewendet wird.

8. Verfahren nach einem der vorhergehenden Ansprüche, bei dem die Vorrichtung außerdem Folgendes umfasst:
- ein Positionierungselement (550), das dafür eingerichtet ist, sequenziell mit dem angetriebenen gezahnten Element (10) ineinanderzugreifen,
- einen Aktor (50), der dafür eingerichtet ist, das Positionierungselement (550) entsprechend einer Bewegung zu verschieben, die mit der Hysteresebewegung des Antriebselements (250) synchronisiert ist, und dies derart, dass das Positionierungselement (550) mit Zähnen des angetriebenen Elements (10) ineinandergreift, wenn das Antriebselement (250) nicht mit Zähnen des angetriebenen Elements ineinandergreift, um das angetriebene Element (10) in Position zu halten.

9. Verfahren nach Anspruch 8, bei dem der Aktor (50) ein Antriebsmodul (501) umfasst, das wenigstens einen feststehenden Kamm (525) und einen beweglichen Kamm (535) umfasst, wobei jeder Kamm eine Reihe von Zähnen umfasst und wobei der bewegliche Kamm (535) dem feststehenden Kamm (525) gegenüberstehend angeordnet ist, und dies derart, dass Zähne des feststehenden Kamms und Zähne des beweglichen Kamms ineinander geschoben sind, wobei der bewegliche Kamm (535) dafür eingerichtet ist, relativ zum feststehenden Kamm (525) verschoben zu werden, und dies in einer Richtung parallel zu den Zähnen der Kämme und bei Anwendung eines Potentialunterschieds zwischen dem feststehenden Kamm und dem beweglichen Kamm, um das Positionierungselement (550) in einer entsprechenden Richtung zu verschieben.

10. Verfahren nach Anspruch 9, bei dem das Positionierungsmodul (501) durch periodische Signale gesteuert wird, die mit Steuerungssignalen für den Antriebsaktor (20) synchronisiert sind.

11. Verfahren nach einem der vorhergehenden Ansprüche, bei dem die Vorrichtung durch eine SOI-Ätztechnik erhalten wird.

12. Verfahren nach einem der Ansprüche 1 bis 10, bei dem die Vorrichtung durch eine HARPSS-Ätztechnik erhalten wird.

13. Verfahren nach einem der vorhergehenden Ansprüche, bei dem die Vorrichtung durch ein Sammelverfahren erhalten wird, das darin besteht, gleichzeitig eine große Zahl elementarer Uhrenvorrichtungen in einen Block aus Halbleitermaterial zu ätzen.

14. Verfahren nach einem der vorhergehenden Ansprüche, bei dem das angetriebene Element (10) ein Zahnrad ist.

15. Verfahren nach Anspruch 14, bei dem das Rad (10) direkt fest mit einem anzutreibenden Zeiger verbunden ist.

## Claims

1. A method for forming a self-assembly device, the method comprising a step of etching in a block of semiconductor material, with the etching taking place in a thickness greater than 10 µm, so as to form a device that includes the following elements:
- a toothed driven element (10),
- a driving element (250) capable of meshing sequentially with the toothed driven element (10),
- an actuator (20) capable of moving the driving element (250) with a hysteresis-type motion so that the driving element (250) meshes with successive teeth (11, 12, 13) of the driven element (10),
wherein the actuator (20) includes an actuating module (201, 202) that itself includes at least one fixed comb (225, 226) and one mobile comb (235, 236), with each comb including a series of fingers, the mobile comb (235, 236) being located opposite to the fixed comb (225, 226) so that fingers of the fixed comb and fingers of the mobile comb interfile with each other,
the mobile comb (235, 236) being capable of being displaced in relation to the fixed comb (225, 226) in a direction parallel to the fingers of the combs, during the application of a potential difference between the fixed comb and the mobile comb, in order to move the driving element (250) in a corresponding direction.

2. A device according to claim 1, wherein the actuator includes a first actuating module (201) capable of moving the driving element (250) in a first direction, and a second actuating module (202) capable of moving the driving element (250) in a second direction, the actuating modules (201, 202) being capable of being controlled simultaneously in order to generate a combined hysteresis movement of the driving element (250).

3. A device according to claim 2, wherein the first actuating module (201) is capable of moving the driving element (250) in a radial direction in relation to the driven element (10), and the second actuating module (202) is capable of moving the driving element (250) in a tangential direction in relation to the driven element (10).

4. A device according to one of claims 2 or 3, wherein the driving element (250) is connected by a radial flexible rod (211) to the radial actuating module (201) and by a tangential flexible rod (212) to the tangential actuating module (202), where the flexible rods (211, 212) allow the movement of the driving element (250) independently under the action of one or other of the actuating modules (201, 202).

5. A device according to one of claims 2 to 4, wherein the actuating modules (201, 202) are controlled by periodic signals that are phase shifted in relation to each other by strictly between 0 and a half period.

6. A device according to claim 5, wherein the periodic signals are phase shifted by a quarter of a period in relation to each other.

7. A device according to one of the preceding claims, the device being etched so that the driving element (250) is in the meshed position with the toothed driven element (10) when no signal is applied to the actuator (20).

8. A device according to one of the preceding claims, that also includes
- a indexing element (550) capable of meshing sequentially with the toothed driven element (10),
- an actuator (50) capable of moving the indexing element (550) in a movement that is synchronised with the hysteresis movement of the driving element (250), so that the indexing element (550) meshes with teeth of the driven element (10) when the driving element (250) is not meshing with the teeth of the driven element, in order to keep the driven element (10) in position.

9. A device according to claim 8, wherein the actuator (50) includes an actuating module (501) that itself includes at least one fixed comb (525) and one mobile comb (535), where each comb includes a series of fingers, the mobile comb (535) being located opposite to the fixed comb (525) so that fingers of the fixed comb and the fingers of the mobile comb mesh with each other, the mobile comb (535) being capable of being displaced in relation to the fixed comb (525) in a direction parallel to the fingers of the combs during the application of a potential difference between the fixed comb and the mobile comb, so as to move the indexing element (550) in a corresponding direction.

10. A device according to claim 9, in which the referencing module (501) is controlled by periodic signals that are synchronized with the control signals of the driving actuator (20).

11. A device according to one of the preceding claims, the said device being obtained by a Sol etching technique.

12. A device according to one of claims 1 to 10, the said device being obtained by an HARPSS etching technique.

13. A device according to one of the preceding claims, the said device being obtained by a collective process consisting of simultaneously etching a large number of elementary clock devices in a block of semiconductor material.

14. A device according to one of the preceding claims, wherein the driven element (10) is a toothed wheel.

15. A device according to claim 14, in which the wheel (10) is directly attached to a needle (hand) which is to be driven.
